# EUROPÄISCHE PATENTSCHRIFT

(11) **EP 0 901 866 B1**
(45) Veröffentlichungstag und Bekanntmachung des Hinweises auf die Patenterteilung: **07.05.2003**
(21) Anmeldenummer: 98115703.5
(22) Anmeldetag: 20.08.1998
(51) Int. Cl.: B23K 10/00

(54) **Koordinaten-Brennschneidmaschine mit einer Einrichtung zum automatischen Einstellen der Anfangshöhe eines Brenners**
Cutting machine with an apparatus designed for automatically controlling the starting height of a gun
Machine de découpage avec un dispositif permettant le réglage de la hauteur initiale d'un chalumeau

(30) Priorität: 08.09.1997 DE 19739351
(43) Veröffentlichungstag der Anmeldung: 17.03.1999
(73) Patentinhaber: Messer Cutting & Welding GmbH, 64823 Gross-Umstadt (DE)
(72) Erfinder: Staacks, Dieter, 63128 Dietzenbach (DE); Schmall, Karl-Heinz, 76532 Baden-Baden (DE)
(74) Vertreter: Staudt, Armin, Dipl.-Ing.

(56) Entgegenhaltungen:
- EP-A- 0 190 100
- WO-A-96/11768
- DE-B- 1 075 765

## Beschreibung

Die Erfindung betrifft eine Koordinaten-Brennschneidmaschine des Typs gemäß WO-A-96/11768.

Beim Plasmaschneiden wird eine Gasmenge hoher Temperatur und hoher Leistungsdichte benutzt; der Plasmastrahl tritt mit so hoher Energie aus der Brennerdüse aus, daß er zum Schneiden von elektrisch leitendem Metall geeignet ist.

Unter "Plasma" versteht man ein dissoziiertes und teilweise ionisiertes elektrisch leitendes Gas.

Der Plasmalichtbogen für das Schneiden von metallischen Werkstücken kann sich nur dann prozeßgerecht aufbauen, wenn der korrekte Zündabstand zwischen Brenner und der Werkstückoberfläche eingehalten wird. Daher ist es notwendig, vor dem Einschalten der Zündspannung den Schneidbrenner auf eine Anfangshöhe zu der Werkstückoberfläche einzustellen, die ein Zünden des Plamagases erlaubt. Wegen der unterschiedlichen Werkstückdicken und Oberflächenkonfigurationen muß diese Position jeweils automatisch ermittelt werden.

Für das Einstellen der Anfangshöhe eines Schneidbrenners verwendet man entweder vorlaufende elektromechanische Fühler, die bei Berührung mit der Werkstückoberfläche einen Stop-Befehl an den Brennerantrieb abgeben oder Näherungsschalter bzw. Annäherungs-/Analogsensoren, welche berührungslos zum Stillsetzen des Antriebs eingesetzt werden.

Nach dem Zünden des Plasmagases wird dann eine analoge Abstandssensorik für die Abstandsregelung im Schneidprozeß weiterverwendet oder auf eine lichtbogenspannungsabhängige Regelung umgeschaltet

Für Schneidprozesse wurden bisher überwiegend kapazitive oder induktive Sensoren für die Abstandsregelung eingesetzt. Da diese Sensoren eine gegenüberliegende Werkstückfläche von mindestens gleicher Größe benötigen, eignen sie sich nicht zum Einstellen der genauen Anfangshöhe der Schneidbrenner über den Werkstücken, wenn der Sensor an einer Werkstückkante steht. Daneben sind Vorrichtungen bekannt, mit denen die Schneidbrenner bei Kollision gegen Zerstörung geschützt werden.

Eine bekannte Einrichtung zur Ermittlung der Anfangshöhe fährt den Schneidbrenner mit angepaßter Annäherungsgeschwindigkeit zunächst so an das Werkstück heran, daß er auf der Werkstückoberfläche aufsetzt. Durch elektrischen Kontakt zwischen Brennerspitze und Werkstück oder durch Auswerten der Antriebskraft-Veränderung beim Aufsetzen wird der Brennerantrieb abgeschaltet. Anschließend fährt der Schneidbrenner von der Maschinensteuerung veranlaßt auf den Zündabstand zurück (US 4,795,882).
Bei der bekannten Einrichtung kann eine Beschädigung des Schneidbrenners beim Aufsetzen auf das Werkstück nicht ausgeschlossen werden. Hinzu kommt, daß bei der Bearbeitung von dünnen Blechen sich beim Aufsetzen des Schneidbrenners eine Durchbiegung einstellt. Die Anfangshöhe entspricht dann nicht der unbelasteten Werkstückoberfläche, so daß der genaue Zündabstand nicht eingehalten werden kann. Darüber hinaus werden die Nebenzeiten wesentlich erhöht, da der Schneidbrenner mit geringer Annäherungsgeschwindigkeit zu der Werkstückoberfläche bewegt wird.

Aufgabe der Erfindung ist es, eine Koordinaten-Brennschneidmaschine mit einer Einrichtung zum automatischen Einstellen der Anfangshöhe eines Schneidbrenners zu schaffen, mittels der eine genaue und schnelle Einstellung des Zündabstandes über der Werkstückoberfläche erreicht werden kann.

Ausgehend von dem im Oberbegriff genannten Stand der Technik ist diese Aufgabe erfindungsgemäß gelöst mit den in dem Anspruch 1 angegebenen Merkmalen.

Weiterbildungen der Erfindung sind in den Unteransprüchen angegeben.

Erfindungsgemäß ist der Brenner mindestens teilweise von einer inneren rohrförmigen Umhüllung, vorzugsweise einem inneren Führungsrohr, umgeben, die mindestens teilweise von einer äußeren rohrförmigen Umhüllung, vorzugsweise einem äußeren Führungsrohr, umgeben ist, wobei zwischen den rohrförmigen Umhüllungen Lagerelemente so angeordnet sind, daß die innere rohrförmige Umhüllung mit dem Brenner mindestens längsverschiebbar ist und ein Positionssensor die Längsverschiebung erfaßt, wobei die innere Umhüllung mit einer Kompensationsvorrichtung verbunden ist, die das Gewicht des Brenners reduziert. Mit der Einrichtung zur Ermittlung des Anfangsabstandes von einer Werkstückoberfläche in einer Bearbeitungsmaschine, insbesondere einer Brennschneidmaschine, in Bezug zu dem Brenner, z.B. einem Schweiß- oder Schneidbrenner, wird der Brenner so zur Werkstückoberfläche hin bewegt, daß es dort zu einer Berührung zwischen Brennerdüse und Werkstückoberfläche kommt, wodurch ein Schaltsignal erzeugt wird. Dabei erfolgt eine genaue Zentrierung des Werkzeugmittelpunktes (Tool Center Points) auf der von der programmierten Maschinensteuerung ausgegebenen Zündstelle über der Werkstückoberfläche. Der in der Einrichtung nach der Erfindung zentrisch angeordnete Schneidbrenner setzt mit Annäherungsgeschwindigkeit auf der Oberfläche des Werkstücks auf, wobei der in der Ausgangslage ein Differenz-Null-Signal erzeugende Positionssensor bei geringster Längsverschiebung zwischen innerer und äußerer Umhüllung im Bereich von ca. 0,1 mm ein Schaltsignal generiert. Das Schaltsignal wird der Maschinensteuerung oder einer separaten Brennersteuerung bzw. einer Auswerteeinheit zugeführt, die die Abwärtsbewegung stillsetzt. Über den ansich bekannten Brennerantrieb wird die Einrichtung mit dem Schneidbrenner in der Z-Achse anschließend solange langsam von der Werkstückoberfläche weg nach oben bewegt, bis der Brenner in der inneren Umhüllung die vor der Längsverschiebung eingenommene Ausgangslage erreicht hat und der Positionssensor wieder das Differenz-Null-Signal erzeugt In dieser Stellung berührt die Brennerdüse exakt die Werkstückoberfläche ohne Werkstückdurchbiegung und/oder axialen Restverschiebeweg zwischen innerer und äußerer Umhüllung. Anschließend fährt die Maschinen-bzw. Brennersteuerung die Einrichtung mit dem Brenner auf den vorgegebenen Zündabstand. Durch die eine Relativbewegung ausführende innere und äußere Umhüllung ist vorteilhaft ein Nachrüsten an jede vorhandene Schneidbrennereinrichtung möglich, wobei die äußere Umhüllung mit der Z-Achse mechanisch verbunden wird. Die vorhandenen Abstandsregelungen können weiter verwendet werden. Darüber hinaus kann die als Bezugs-Punkt bzw. -ebene für das Einstellen des Zündabstandes maßgebende Werkstückoberfläche mit relativ hoher Annäherungsgeschwindigkeit angefahren werden, da über die mit der inneren Umhüllung verbundene Kompensationsvorrichtung das Brennergewicht auf einen geringen Restwert reduziert ist und deshalb bei Aufsetzen auf das Werkstück nur geringe Kräfte entstehen.

Unmittelbar nach dem Aufsetzen des Schneidbrenners werden durch das Schaltsignal des Positionssensors Folgealgorithmen ausgelöst, so daß überlagert einstellbare programmierbare Höhenfunktionsabläufe der Z-Achse gesteuert werden können. Die Höhenfunktionsabläufe, zum Beispiel die programmierbar einstellbare definierte Zündhöhe für das Zünden des Plasmagases, das Lochstechen udgl. können über eine Mikrochiptechnik ineinander übergehen, so daß die Nebenzeiten wesentlich reduziert werden können. Dies wird dadurch erreicht, daß das generierte Schaltsignal unmittelbar der Steuerung zur Verfügung gestellt wird, die den die Höhenfunktionsabläufe steuernden Antrieb nahezu zeitverzugslos steuert

Dadurch daß der Schneidbrenner zentrisch in der inneren Umhüllung angeordnet ist und die äußere Umhüllung konzentrisch zur inneren Umhüllung angeordnet ist, ist der erfaßte Tool-Center-Point auf der Werkstückoberfläche identisch mit der Zündstelle, so daß eine exakte Einstellung der Zündhöhe an diesem Punkt der Werkstückoberfläche sichergestellt ist

Dadurch daß die Lagerelemente als Kugelführungen, vorzugsweise Kugelhülsen oder als Gleitlager ausgebildet sind, ergeben sich nahezu keine Toleranzen zwischen den Umhüllungen, da die Lagerelemente weitestgehend spielfrei sind. Dadurch führen Bewegungen des Schneidbrenners beim Aufsetzen auf die Werkstückoberfläche nicht zu Veränderungen der Schneidbrennerposition. Der Schneidbrenner ist vorteilhaft in der äußeren Umhüllung drehbar gelagert, wobei eine Drehung um mehr als 360° möglich ist. Dies erweitert den Einsatz des Schneidbrenners. Dieser kann zum Beispiel beim Ausschneiden von Löchern eingesetzt werden, wobei über die Drehung des Schneidbrenners ein Verwinden des Schlauchpaketes vermieden wird.

Dadurch daß die Kompensationsvorrichtung einen um die innere Umhüllung angeordneten Federtopf aufweist, in dem eine Feder angeordnet ist, die sich gegen einen an der inneren Umhüllung befestigten Flansch abstützt und der Federtopf mit einer Feinverstellschraube verbunden ist, die mit der äußeren Umhüllung verbunden ist, kann die Feder in weiten Bereichen exakt eingestellt und damit das Gewicht des Brenners mit der inneren Umhüllung kompensiert werden.

Dadurch daß die äußere Umhüllung mit einem Gehäuse verbunden ist, in dem eine mit dem der äußeren Umhüllung verbundene Taumelscheibe elastisch bewegbar angeordnet ist und an der zylindrischen Gehäusewand zentrisch geführt ist, wird ein wirksamer Kollisionsschutz für die erfindungsgemäße Einrichtung und den Schneidbrenner gegen Kräfte in Längs- und Querrichtung erreicht

Vorteilhaft sind an der inneren Umhüllung Verstellkörper, insbesondere Verstellringe mit radial beweglichen Elementen, vorzugsweise Stellschrauben, vorgesehen, die ein zentrisches Ausrichten des Schneidbrenners in der inneren Umhüllung ermöglichen. Durch diese Ausbildung kann eine innere Umhüllung eingesetzt werden, deren Innendurchmesser an den Außendurchmesser des Schneidbrenners angepaßt ist Hierdurch ist es möglich, Schneidbrenner in einem weiten, praxisgerechten Durchmesserbereich, vorzugsweise von 25 bis 54 mm, in der inneren Umhüllung anzuordnen und zentrisch auszurichten. Dies erhöht die Nachrüstbarkeit unter Beibehaltung der zentrischen Anordnung des Schneidbrenners.

Dadurch daß der Flansch an mindestens einem Verstellring ausgebildet ist und der Verstellring axial verschiebbar auf der inneren Umhüllung angeordnet ist, kann die Kompensation des Gewichts des Schneidbrenners auch stufenweise in größeren Bereichen eingestellt werden.

Zwischen der äußeren Umhüllung und der inneren Umhüllung sind an den unteren und oberen Übergängen Faltenbälge angeordnet. Sie verhindern vorteilhaft das Eindringen von Staub und Schmutz in die bewegbaren Teile und Lagerelemente.

Nach einem Ausführungsbeispiel ist der Positionssensor auf der Basis des Differenzspulen oder Differenzfeld-Systems mit aktiver Erregung ausgebildet, welcher eine auf der Außenseite der inneren Umhüllung eingebrachte schmale Rille berührungslos abtastet, so daß in Normallage ohne Längsverschiebung ein Differenz-Null-Signal ansteht und bei geringer Längsverschiebung des Schneidbrenners der Positionssensor ein Schaltsignal generiert.

Bei der erfindungsgemäßen Einrichtung ist der Brenner vorteilhaft in einem Führungsrohr zentrisch montiert, welches sich in einem konzentrisch angeordneten größeren Führungsrohr mittels leichtgängiger Lagerung, vorwiegend durch Kugelkäfiglager längsverschiebbar bewegen kann, wobei zwischen innerem und äußerem Führungsrohr eine elektrische Schalteinrichtung angeordnet ist, welche bei Verschiebung zwischen beiden ein Schaltsignal erzeugt, wobei ferner das inneren Führungsrohr mit dem Schneidbrenner eine verstellbare und mit einer Feder ausgestattete, gegen das äußere Führungsrohr wirkende Vorrichtung so gewichtsentlastend einstellen kann, daß bei senkrechter Anordnung der Führungsrohre eine nahezu vollständige Reduzierung des Gewichtes von innerem Führungsrohr und Brenner ermöglicht wird.

Weiterhin sind in dem Führungsrohr radial verstellbare, ringförmige und das Bearbeitungswerkzeug umschließende Körper am unteren und am oberen Ende angebracht, mit denen durch radial bewegliche vorzugsweise als Stellschrauben ausgebildete Justiervorrichtungen das zentrische Ausrichten des Brenners im Führungsrohr ermöglicht wird.

Außerdem ist das innere Führungsrohr im äußeren Führungsrohr durch geeignete Lagerung, vorzugsweise Kugelkäfiglager, sowohl längsverschiebbar als auch drehbar gestaltet Das äußere Führungsrohr ist mit einer Taumelscheibe vorzugsweise im Bereich der Gewichts-Schwerpunkte ausgestattet, welche in einem Gehäuse durch vorgespannte Federn lagestabil gehalten wird und bei Einwirkung von seitlichen Kräften auf das äußere Rohr oder von stärkeren Krafteinwirkungen in Längsrichtung oder Querrichtung auf das innere Rohr den Brenner gegen Federkraft auslenken und somit eine kollisionsbedingte mechanische Schädigung der Einrichtung verhindern kann.

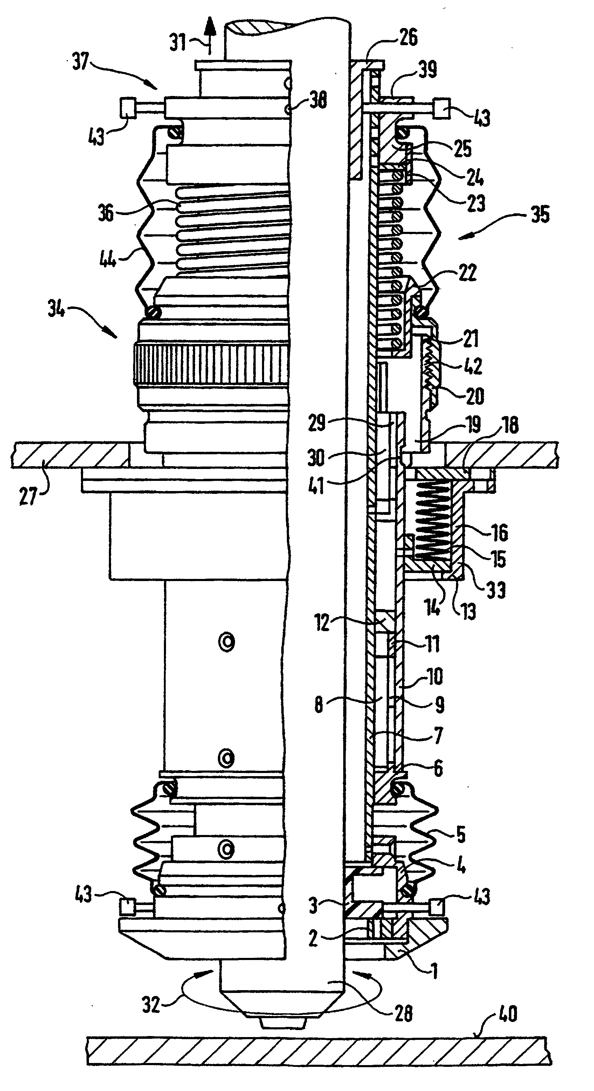

Ein Ausführungsbeispiel ist in der Zeichnung dargestellt und wird im folgenden näher beschrieben.

In der Zeichnung ist ein Plasmaschneidbrenner 28 von einer im Teilschnitt schematisch dargestellten Einrichtung 34 zum automatischen Einstellen der Anfangshöhe umgeben.

Die Einrichtung 34 besteht im wesentlichen aus zwei rohrförmigen Umhüllungen, die als Außenrohr 10 und Innenrohr 7 ausgebildet sind. Der Brenner 28 ist zentrisch im Innenrohr 7 ausgerichtet und Außenrohr 10 ist konzentrisch zum Innenrohr 7 angeordnet. An dem unteren und oberen Übergang von dem Außenrohr 10 zu dem Innenrohr 7 sind Faltenbälge 5, 44 angeordnet, die das Eindringen von Schmutz in den zwischen Außenrohr 10 und Innenrohr 7 gebildeten Zwischenraum verhindern. Zwischen Außen- und Innenrohr 10, 7 befinden sich zwei Kugelführungen 8,9 und 29, 30, vorzugsweise Kugelhülsen, die eine Längsverschiebung des Innenrohres 7 mit den Schneidbrenner 28 in Richtung 31 zum nicht näher dargestellten Schlauchpaket und eine Drehung 32 des Innenrohres 7 mit dem Schneidbrenner 28 im Außenrohr um n x 360° ermöglichen. Das Außenrohr 10 ist mit einer Taumelscheibe 14, die in einem Kollisionsschutz-Gehäuse 16 angeordnet ist, verbunden. An der Gehäusewand 33 des Gehäuses 16 ist die Taumelscheibe 14 zentrisch geführt und über Federn 15 mit dem Außenrohr 10 elastisch im Gehäuse 16 bewegbar. Das Kollisionsschutz-Gehäuse 16 mit dem Abschlußdeckel 18 ist über Halterung 27 mit dem Brennerantrieb (Z-Achse) verbunden.

Über die zwischen Außen- und Innenrohr angeordneten Anlageringe 11 und 12 ist das Innenrohr 7 am unteren Anschlag 11 fest zum Außenrohr positioniert. Das Gewicht des mit dem Isolierring 3 über Feststellring 2 und Klemmkörper 26 fest verbundenen und in dem Führungskörper 4 zentrierten Schneidbrenners 28 wird durch Einstellen der Kompensationsvorrichtung 35 in weiten Bereichen ausgeglichen.Die Kompensationsvorrichtung 35 besteht im wesentlichen aus einem um das Innenrohr 7 angeordneten Federtopf 22, in dem eine Feder 36 angeordnet ist. Der Federtopf 22 ist über eine Verstellschraube 21, die vorzugsweise ein Feingewinde aufweist, mit dem Außenrohr 10 verbunden. Dem Außenrohr 10 ist hierzu eine Gewindehülse 42 zugeordnet Die Feder 36 liegt mit ihrem anderen Ende an einem mit dem Innenrohr verbundenen Flansch 24 an, der Bestandteil eines Körpers 37 ist.

Körper 4 und 37 sind mit dem Innenrohr 7 verbunden und weisen mindestens drei radial bewegliche Elemente 43, vorzugsweise Stellschrauben, auf, die durch Schrauben in die Körper 4 und 37 in ihrer Länge verändert werden können. Sie ermöglichen ein zentrisches Ausrichten des Brenners 28. Der Verstellkörper 37 weist eine Stufenverstellung auf, die aus einem auf dem Umfang des Innenrohres axial verstellbaren Verstellring 39 besteht, der über Öffnungen 38 arretierbar ist, die beabstandet in der Mantelfläche des Innenrohres angeordnet sind. Über die Stufenverstellung 38,39 und Feinverstell-Gewindering 20 sowie Feder 36 kann die Kompensationsvorrichtung 35 auf das Gewichtes des Scheidbrenners 28 eingestellt werden. Damit wird die beim Aufsetzen der Brennerspitze auf die Werkstückoberfläche 40 entstehende Kraft minimiert.

Aus der oberen Stellung der Z-Achse wird der Schneidbrenner 28 mit der Einrichtung 34 in Richtung Werkstückoberfläche 40 gefahren. Beim Aufsetzen der Brennerspitze wird der Schneidbrenner 28 mit dem Innenrohr 7 im Außenrohr 10 in Richtung 31 längsverschoben. Im Bereich der Feinverstellung 20 befindet sich der elektronische Positionssensor in der Ringkammer 19. Bei einer Relativverschiebung zwischen Innen- und Außenrohr 7, 10 wird von dem Positioniersensor über ein berührungsloses Abtasten einer auf der Außenseite des Innenrohres 7 eingebrachten schmalen Markierung 41 das Schaltsignal generiert. Der Postionssensor ist vorzugsweise auf der Basis eines Differentialspulen- oder Differenzfeld-Systems mit aktiver Erregung ausgebildet. Er gibt bereits bei sehr geringer Längsverschiebung von ca. 0,1 mm des Innenrohres 7 ein Schaltsignal ab.

In der nicht näher dargestellten Auswerteeinheit wird dieses Signal so aufbereitet, daß damit der Antrieb stillgesetzt und/oder sofort eine rücklaufende Bewegung des Antriebs eingeleitet wird, die das Außenrohr 10 solange verschiebt, bis der elektronische Positionssensor wieder das Differenz-Null-Signal abgibt

Diese Stellung ist die bestmögliche Anfangsposition, von der aus die Zündhöhe eingestellt wird. Nahezu gleichzeitig gibt die Steuerung das Signal "Anfangshöhe erreicht" an die nachgeschaltete Steuerungsgruppe ab und leitet die weitere Bewegung des Schneidbrenners zur Position "Zündhöhe" ein.

Der besondere Kollisionsschutz wirkt bei unvorhergesehenen seitlichen oder längsgerichteten Krafteinwirkungen auf den Brenner oder auf die Einrichtung 34. Dabei wird das Außenrohr entweder seitlich schwenkend oder nach oben ausgelenkt, so daß in dem Gehäuse 16 die Federn 15 über den Taumelscheibe 14 entsprechend Druckkräften ausgesetzt werden und der Taumelscheibe 14 zur Abschlußplatte 18 hin ausweichen kann.

Als Option kann dadurch auch ein besonderes Kollisions-Schaltsignal erzeugt werden, das den Brenner über den Antrieb aus der Gefahrenzone herausfährt.

Der Freiheitsgrad "Drehung um mehr als 360°" ermöglicht den Einsatz der Einrichtung 34 für erweiterte Anwendungsgebiete in Plasma-Koordinaten-Brennschneidmaschinen.

## Patentansprüche

1. Koordinaten-Brennschneidmaschine mit einer Einrichtung zum automatischen Einstellen der Anfangshöhe eines Brenners, insbesondere eines Plasmabrenners, über einer Werkstückoberfläche, wobei
der Brenner (28) mindestens teilweise von einer inneren rohrförmigen Umhüllung (7) umgeben ist, die mindestens teilweise von einer äußeren rohrförmigen Umhüllung (10) umgeben ist, wobei
zwischen den rohrförmigen Umhüllungen (7,10) Lagerelemente (8,9 und 29,30) so angeordnet sind, daß die innere rohrförmige Umhüllung (7) mit dem Brenner (28) mindestens längsverschiebbar ist und wobei
ein Positionssensor vorgesehen ist, der die Längsverschiebung erfaßt **dadurch gekennzeichnet, daß**
die innere Umhüllung (7) mit einer Kompensationsvorrichtung (35) verbunden ist, die das Gewicht der inneren Umhüllung (7) mit dem Brenner (28) reduziert.

2. Koordinaten-Brennschneidmaschine nach Anspruch 1,
**dadurch gekennzeichnet,**
**daß** der Brenner (28) zentrisch in der inneren Umhüllung (7) angeordnet ist und die äußere Umhüllung (10) konzentrisch zur inneren Umhüllung (7) angeordnet ist.

3. Koordinaten-Brennschneidmaschine nach Anspruch 1 oder 2,
**dadurch gekennzeichnet,**
**daß** die Lagerelemente (8,9 und 29,30) als Kugelführungen, vorzugsweise Kugelhülsen, ausgebildet sind.

4. Koordinaten-Brennschneidmaschine nach Anspruch 1 oder 2,
**dadurch gekennzeichnet,**
**daß** die Lagerelemente (8,9 und 29,30) als Gleitlager ausgebildet sind.

5. Koordinaten-Brennschneidmaschine nach einem der Ansprüche 1 bis 4,
**dadurch gekennzeichnet,**
**daß** der Brenner (28) in der äußeren Umhüllung (10) drehbar (32) ist.

6. Koordinaten-Brennschneidmaschine nach einem der Ansprüche 1 bis 5,
**dadurch gekennzeichnet,**
**daß** die Kompensationsvorrichtung (35) einen um die innere Umhüllung (7) angeordneten Federtopf (22) aufweist, in dem eine Feder (36) angeordnet ist, die sich gegen einen an der inneren Umhüllung (7) befestigten Flansch (24) abstützt.

7. Koordinaten-Brennschneidmaschine nach einem der Ansprüche 1 bis 6,
**dadurch gekennzeichnet,**
**daß** der Federtopf (22) mit einer Feinverstellschraube (21) verbunden ist, die mit der äußeren Umhüllung (10) verbunden ist

8. Koordinaten-Brennschneidmaschine nach einem der Ansprüche 1 bis 7,
**dadurch gekennzeichnet,**
**daß** die äußere Umhüllung (10) mit einem Gehäuse (16) verbunden ist, in dem eine mit der äußeren Umhüllung verbundene Taumelscheibe (14) elastisch bewegbar angeordnet und an der zylindrischen Gehäusewand (33) zentrisch geführt ist.

9. Koordinaten-Brennschneidmaschine nach einem der Ansprüche 1 bis 8,
**dadurch gekennzeichnet,**
**daß** an der inneren Umhüllung (7) Körper (4, 37) mit radial beweglichen Elementen (43) vorgesehen sind, die ein zentrisches Ausrichten des Brenners (28) in der inneren Umhüllung (7) ermöglicht.

10. Koordinaten-Brennschneidmaschine nach einem der Ansprüche 1 bis 9,
**dadurch gekennzeichnet,**
**daß** mindesens ein Körper (37) als Verstellring ausgebildet ist und die Elemente (4) als Stellschrauben.

11. Koordinaten-Brennschneidmaschine nach einem der Ansprüche 1 bis 10,
**dadurch gekennzeichnet,**
**daß** der Flansch (24) an mindestens einem Verstellring (37) ausgebildet ist und der Verstellring (37) axial verschiebbar und feststellbar auf der inneren Umhüllung (7) angeordnet sind.

12. Koordinaten-Brennschneidmaschine nach einem der Ansprüche 1 bis 11,
**dadurch gekennzeichnet,**
**daß** zwischen der äußeren Umhüllung (10) und der inneren Umhüllung (7) an den unteren und oberen Übergängen Faltenbälge (5,44) angeordnet sind, die das Eindringen von Staub und Schmutz in die bewegbaren Teile und Lagerelemente verhindern.

13. Koordinaten-Brennschneidmaschine nach einem der Ansprüche 1 bis 12,
**dadurch gekennzeichnet,**
**daß** der Positionssensor auf der Basis des Differenzialspulen- oder Differenzfeld- Systems mit aktiver Erregung ausgebildet ist, welcher eine auf der Außenseite der inneren Umhüllung eingebrachte schmale Markierung (41) berührungslos abtastet, so daß in Normallage ohne Längsverschiebung ein Differenz-Null-Signal ansteht und bei geringer Längsverschiebung der Positionssensor ein Schaltsignal generiert

## Claims

1. A coordinate flame-cutting machine with a means for automatically setting the initial height of a torch, in particular a plasma torch, above a workpiece surface, wherein the torch (28) is at least partially surrounded by an inner tubular enclosure (7), which is at least partially surrounded by an outer tubular enclosure (10), wherein bearing elements (8, 9 and 29, 30) are arranged between the tubular enclosures (7, 10) in such a way that the inner tubular enclosure (7) is at least longitudinally displaceable with the torch (28), wherein there is provided a position sensor which senses the longitudinal displacement and **characterized in that** the inner enclosure (7) is connected to a compensation device (35) which reduce the weight of the inner enclosure (7) with the torch (28).

2. The coordinate flame-cutting machine as claimed in claim 1, **characterized in that** the torch (28) is arranged centrally in the inner enclosure (7) and the outer enclosure (10) is arranged concentrically with respect to the inner enclosure (7).

3. The coordinate flame-cutting machine as claimed in claim 1 or 2, **characterized in that** the bearing elements (8, 9 and 29, 30) are designed as ball guides, preferably ball bushes.

4. The coordinate flame-cutting machine as claimed in claim 1 or 2, **characterized in that** the bearing elements (8, 9 and 29, 30) are designed as sliding bearings.

5. The coordinate flame-cutting machine as claimed in one of claims 1 to 4, **characterized in that** the torch (28) is rotatable (32) in the outer enclosure (10).

6. The coordinate flame-cutting machine as claimed in one of the claims 1 to 5, **characterized in that** the compensation device (35) has a spring cup (22) which is arranged around the inner enclosure (7) and in which there is arranged a spring (36) supported against a flange (24) fastened on the inner enclosure (7).

7. The coordinate flame-cutting machine as claimed in one of the claims 1 to 6, **characterized in that** the spring cup (22) is connected to a fine-adjusting screw (21), which is connected to the outer enclosure (10).

8. The coordinate flame-cutting machine as claimed in one of claims 1 to 7, **characterized in that** the outer enclosure (10) is connected to a housing (16) in which a wobble plate (14), connected to the outer enclosure, is arranged in an elastically movable manner and is centrally guided on the cylindrical housing wall (33).

9. The coordinate flame-cutting machine as claimed in one of claims 1 to 8, **characterized in that** on the inner enclosure (7) there are provided bodies (4, 37) with radially movable elements (43), which permit a central alignment of the torch (28) in the inner enclosure (7).

10. The coordinate flame-cutting machine as claimed in one of claims 1 to 9, **characterized in that** at least one body (37) is designed as an adjusting ring and the elements (4) are designed as set-screws.

11. The coordinate flame-cutting machine as claimed in one of claims 1 to 10, **characterized in that** the flange (24) is formed on at least one adjusting ring (37) and the adjusting ring (37) is arranged axially displaceably and fixably on the inner enclosure (7).

12. The coordinate flame-cutting machine as claimed in one of claims 1 to 11, **characterized in that** bellows (5, 44) are arranged between the outer enclosure (10) and the inner enclosure (7) at the lower and upper transitions which bellows prevent the ingress of dust and dirt into the movable parts and bearing elements.

13. The coordinate flame-cutting machine as claimed in one of claims 1 to 12, **characterized in that** the position sensor is designed on the basis of a differential-coil or differential-field system with active excitation, which contactlessly senses a narrow marking (41) made on the outer side of the inner enclosure, with the result that in the normal position, without longitudinal displacement, a difference-zero signal is obtained and, when there is slight longitudinal displacement, the position sensor generates a switching signal.

## Revendications

1. Machine de découpage au chalumeau commandée sans les coordonnées, comportant une installation pour régler automatiquement la hauteur initiale du chalumeau en particulier un chalumeau à plasma, au-dessus de la surface de la pièce,
le chalumeau (28) étant entouré au moins en partie par une enveloppe tubulaire intérieure (7) qui est entourée au moins en partie par une enveloppe tubulaire extérieure (10),
et entre les enveloppes tubulaires (7, 10) se trouvent des éléments de palier (8, 9) et (29, 30),
l'enveloppe tubulaire intérieure (7) pouvant coulisser au moins longitudinalement avec le chalumeau (28) et,
un capteur de position détecte le coulissement longitudinal,
**caractérisée en ce que**
l'enveloppe intérieure (7) est reliée à un dispositif de compensation (35) qui réduit le poids de l'enveloppe intérieure (7) avec le chalumeau (28).

2. Machine de découpage au chalumeau, commandée par les coordonnées selon la revendication 1,
**caractérisée en ce que**
le chalumeau (28) est installé en position centrale dans l'enveloppe intérieure (7) et l'enveloppe extérieure (10) entoure de manière concentrique l'enveloppe intérieure (7).

3. Machine de découpage au chalumeau, commandée par les coordonnées selon la revendication 1 ou 2,
**caractérisée en ce que**
les éléments de palier (8, 9) et (29, 30) sont des moyens de guidage à billes de préférence des douilles à billes.

4. Machine de découpage au chalumeau, commandée par les coordonnées selon les revendications 1 ou 2,
**caractérisée en ce que**
les éléments de palier (8, 9) et (29, 30) sont des paliers lisses.

5. Machine de découpage au chalumeau, commandée par les coordonnées selon l'une des revendications 1 à 4,
**caractérisée en ce que**
le chalumeau (28) peut tourner (32) dans l'enveloppe extérieure (10).

6. Machine de découpage au chalumeau, commandée par les coordonnées selon l'une des revendications 1 à 5,
**caractérisée en ce que**
le dispositif de compensation (35) comporte un pot à ressort (22) installé autour de l'enveloppe intérieure (7), pot contenant un ressort (36) qui s'appuie contre une bride (24) fixée à l'enveloppe intérieure (7).

7. Machine de découpage au chalumeau, commandée par les coordonnées selon l'une des revendications 1 à 6,
**caractérisée en ce que**
le pot à ressort (22) est relié à une vis de réglage de précision (21) elle-même reliée à l'enveloppe extérieure (10).

8. Machine de découpage au chalumeau, commandée par les coordonnées selon l'une des revendications 1 à 7,
**caractérisée en ce que**
l'enveloppe extérieure (10) est reliée à un boîtier (16) recevant de façon mobile élastiquement, un disque de mutation MU etc. (14) relié à l'enveloppe extérieure et guidé de manière centrée contre la paroi cylindrique (33).

9. Machine de découpage au chalumeau, commandée par les coordonnées selon l'une des revendications 1 à 8,
**caractérisée en ce que**
l'enveloppe intérieure (7) comporte des corps (4, 37) avec des éléments (43) mobiles radialement, permettant un alignement centré du chalumeau (28) dans l'enveloppe intérieure (7).

10. Machine de découpage au chalumeau, commandée par les coordonnées selon l'une des revendications 1 à 9,
**caractérisée en ce qu'**
au moins un corps (37) est réalisé sous la forme de bague de réglage et les éléments (4) sous la forme de vis de réglage.

11. Machine de découpage au chalumeau, commandée par les coordonnées selon l'une des revendications 1 à 10,
**caractérisée en ce que**
la bride (24) est réalisée sur au moins une bague de réglage (37) et cette bague de réglage (37) est montée de façon à coulisser axialement et pouvoir se bloquer sur l'enveloppe intérieure (7).

12. Machine de découpage au chalumeau, commandée par les coordonnées selon l'une des revendications 1 à 11,
**caractérisée en ce que**
les jonctions inférieures et supérieures de l'enveloppe extérieure (10) et de l'enveloppe intérieure (7) comportent des soufflets (5, 44) évitant la pénétration de poussières et de saletés dans les pièces mobiles et les éléments de palier.

13. Machine de découpage au chalumeau, commandée par les coordonnées selon l'une des revendications 1 à 12,
**caractérisée en ce que**
le capteur de position est réalisé sur la base de bobine différentielle ou d'un système à champ différentiel avec une excitation active détectant sans contact un repérage étroit (41) prévu sur le côté extérieur de l'enveloppe intérieure de façon à obtenir un signal de différence zéro en positon normale sans coulissement longitudinal ou un signal de commutation en cas de faible coulissement longitudinal du capteur de position.
